# EUROPEAN PATENT SPECIFICATION

(11) **EP 1 683 713 B1**
(45) Date of publication and mention of the grant of the patent: **29.08.2007**
(21) Application number: 05001129.5
(22) Date of filing: 20.01.2005
(51) Int. Cl.: B62K 11/02, B62K 19/02

(54) **Vehicle body frame structure**
Rahmenstruktur einer Fahrzeugkarrosserie
Structure de chassis de carrosserie de véhicule

(43) Date of publication of application: 26.07.2006
(73) Proprietor: HONDA MOTOR CO., Ltd., Tokyo (JP)
(72) Inventor: Yamashita, Akihiro c/o Kabushiki Kaisha Honda Gijutsu Kenkyusho, Wako-shi Saitama (JP)
(74) Representative: Rupp, Christian

(56) References cited:
- PATENT ABSTRACTS OF JAPAN vol. 1998, no. 08, 30 June 1998 (1998-06-30) & JP 10 067368 A (YAMAHA MOTOR CO LTD), 10 March 1998 (1998-03-10)
- PATENT ABSTRACTS OF JAPAN vol. 2002, no. 05, 3 May 2002 (2002-05-03) & JP 2002 021553 A (SUZUKI MOTOR CORP), 23 January 2002 (2002-01-23)

## Description

The present invention relates to a vehicle body frame structure having a left-right pair of hollow members which is provided in, for example, a saddle ride type vehicle such as a four-wheel buggy car. Particularly, the invention relates to a vehicle body frame structure in which resonance modes in the left and right hollow members are set approximate to each other in the case where a heavy body such as a muffler is supported on either one of the left and right sides of a vehicle body frame.

As a vehicle body frame in a saddle ride type vehicle such as a four-wheel buggy car, there is known one which includes a main frame on the vehicle body front side for supporting an engine, and a rear frame including seat rails for supporting a seat on the rear side of the main frame, and in which each of the main frame and the rear frame is composed of a left-right pair of pipe members (see, for example, Patent Document 1). Japanese Patent Laid-open No. 2000-33894

Meanwhile, in the above-mentioned vehicle body frame structure, there are cases where a heavy body such as an exhaust muffler, a battery, etc. is supported on the side of either one of the left-right pair of rear frames. In this case, since the vibration modes in the left and right rear frames are different, resonance may be generated between the left and right rear frames. In order to prevent the resonance from being generated, it may be contemplated to adopt a structure in which the left and right pipe members are different in diametral size so that they have different moduli of section. When such a structure is adopted, however, pipe members different in diametral size are used on the left and right sides, so that it is desired not to spoil the appearance quality. Besides, in the case of assembling the rear frames by thus using the pipe members with different diametral sizes on the left and right sides, the mount portions of mount component parts or connection component parts are different between the left and right sides, so that the assembling work is liable to be complicated, and, accordingly, it is also desired to enhance the assemblability. Accordingly, it is an object of the present invention to meet these requests.

In order to solve the above problems, the invention as set force in claim 1 concerning a vehicle body frame structure is characterized in that, in a vehicle body frame having a left-right pair of hollow members, a heavy body is supported on the side of only one of the left-right pair of hollow members, and the plate thickness of the hollow member on the side where the heavy body is supported is smaller than the plate thickness of the hollow member on the other side.

The invention as set forth in claim 2 is characterized in that, in claim 1, the heavy body is an exhaust muffler or a battery, and the left-right pair of hollow members differing in plate thickness are seat rails for supporting the seat.

The invention as set forth in claim 3 is characterized in that, in claim 1, the hollow member on either one of the left and right sides, of the hollow members differing in plate thickness between the left and right sides, is provided with a mis-assembly preventive means for discrimination thereof from the hollow member on the other side.

According to the invention as set forth in claim 1, the left and right hollow members which constitute the vehicle body frame and on either one of the left and right sides of which the heavy body is supported are different from each other in plate thickness, and the plate thickness of the hollow member on the side where the heavy body is not supported is greater than the plate thickness of the hollow member on the side where the heavy body is supported, so that vibration mode can be regulated with the left and right rear frames, and generation of resonance can be restrained. Moreover, with the plate thickness made different between the left and right sides, the outer sizes such as diametral sizes of the left and right hollow members can be equalized, so that good appearance quality can be maintained, and assemblability can be enhanced.

According to the invention as set forth in claim 2, the left and right hollow members constituting the vehicle body frame are a left-right pair of seat rails, and the heavy body is an exhaust muffler or a battery, so that this structure can be easily applied to a conventional general vehicle body structure.

According to the invention as set forth in claim 3, the hollow member on either one of the left and right sides, of the pair of hollow members, is provided with a mis-assembly preventive means, so that even if the left and right hollow members cannot easily be discriminated from each other on an appearance basis, it is possible to easily and securely discriminate the left and right members from each other and thereby to prevent mis-assembly, so that assemblability is further enhanced.
Fig. 1 is a side view of a four-wheel buggy car.
Fig. 2 is a plan view of an essential part of the vehicle body structure of the four-wheel buggy car.
Fig. 3 is a side view of a rear frame.
Fig. 4 is a plan view of the rear frames.
Fig. 5 is a sectional view of left and right seat rails along line 5-5 of Fig. 3.

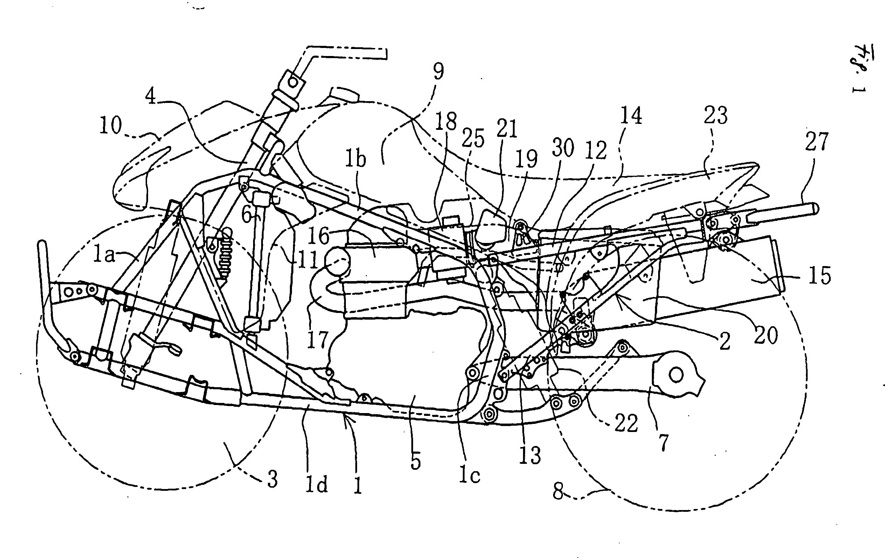

Now, one embodiment of the present invention as applied to a four-wheel buggy car will be described below. Incidentally, in the present application, the terms front and rear, left and right, and upper and lower are used on the basis of the vehicle body in the condition where the vehicle is running forwards. Fig. 1 is a side view of a four-wheel buggy car, in which a vehicle body frame has a main frame 1 roughly in a closed loop form in side view, and rear frames 2 extending rearwards therefrom in a truss structure which is roughly triangular in side view.

The main frame 1 is composed of pipe members made of an appropriate metal such as a light alloy, and includes front pipes 1a, upper pipes 1b, pivot pipes 1c, and lower pipes 1d. Front wheels 3 are supported respectively on left and right portions of a front portion of the main frame 1, and are steered by a steering shaft 4 disposed skewly vertically. An engine 5 is supported on the rear portion side of the main frame 1, and a radiator 6 is supported on the front side of the engine 5.

A front end portion of a rear swing arm 7 is swingably supported on the pivot pipes 1c located on the rear side of the engine 5 and disposed in the vertical direction, and a left-right pair of rear wheels 8 are supported at rear end portions of the rear swing arm 7.
On the upper side of the engine 5, a fuel tank 9 is supported on the upper pipes 1b. A front portion of the vehicle body is covered by a front cowl 10 and a front fender 11.

The rear frames 2 include seat rails 12 extending upwardly rearwards from rear end upper portions of the upper pipes 1b, and rear stays 13 extending upwardly rearwards from lower portions of the pivot pipes 1c and connected to rear portions of the seat rails 12. The seat rails 12 and the rear stays 13 are pipe members made of the same material as the material of the main frame 1. A seat 14 is supported on the seat rails 12. In addition, an exhaust muffler 15 is disposed on one side of the vehicle body (in this embodiment, on the right side of the vehicle body) while overlapping with the rear wheels 8 in side view, and is supported by the seat rail 12.

The rear end of an exhaust pipe 17 is connected to the front end of the muffler 15. The exhaust pipe 17 extends forwards from an exhaust port provided at a front surface of a cylinder head 16 of the engine 5, then extends via a lateral side of the engine 5, and extends rearwards. An intake port is provided at a rear surface of the cylinder head 16, and a carburetor 18 is connected thereto. The carburetor 18 sucks clean air from an air cleaner 20 provided on the rear side through a connecting tube 19. Symbol 21 denotes a silencing chamber, 22 denotes a rear cushion, and 23 denotes a rear fender.

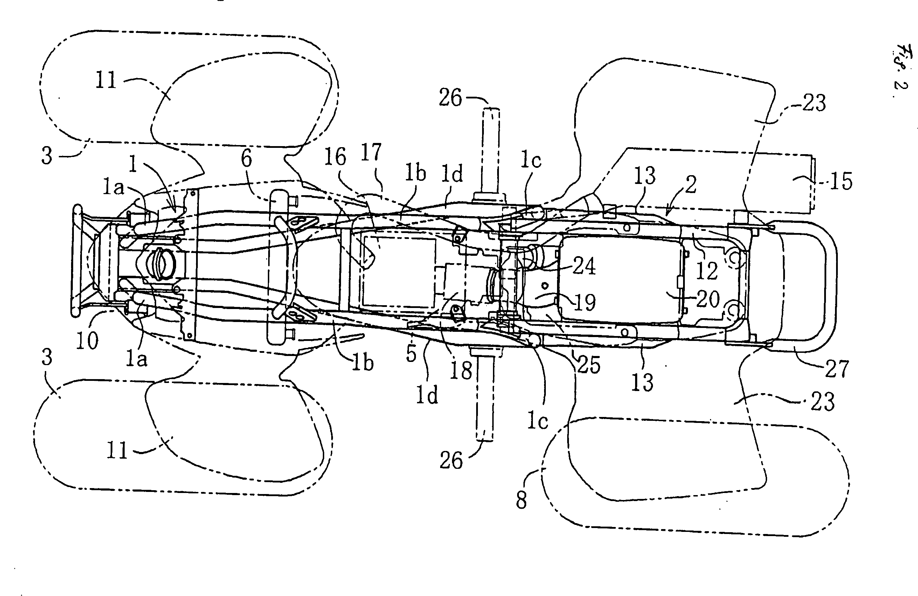

Fig. 2 is a plan view of an essential part of the vehicle body structure of the four-wheel buggy car, in which the main frame 1 and the rear frames 2 are each composed of a left-right pair of pipe members. As is clear from the figure, the air cleaner 20 is contained between the left and right rear frames 2. Symbol 24 denotes an intake duct, which extends forwards from a front surface of the air cleaner 20, and is opened to a lateral side. Besides, the opening position of the intake duct 24 is located on the upper side of an upper surface of the connecting tube 19 and on the lower side of a dust cover 25.

The dust cover 25 covers the upper side of each of the connecting tube 19 and the intake duct 24 to the front end of the upper surface of the air cleaner 20, and is mounted to the left and right upper pipes 1b and seat rails 12. The spaces on the upper side of the air cleaner 20 and the dust cover 25 constitute intake passages, for introducing the outside air from the upper lateral side of the air cleaner 20 in the rear fender 23 and leading the air to the intake duct 24. Symbol 26 denotes step bars, and 27 denotes a rear carrier.

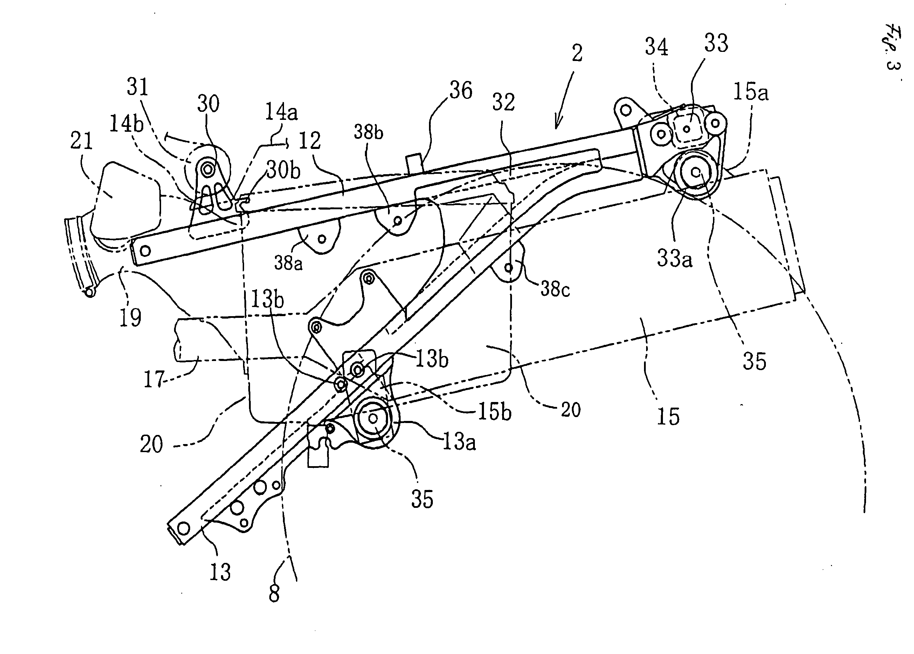

Fig. 3 is a side view of the rear frame 2, in which a damper bracket 30 is welded to a portion, near a front end portion, of the seat rail 12, and a damper rubber 31 is mounted to an upper end portion of the damper bracket 30. A hook 14b provided on a lower surface of a bottom plate 14a of the seat 14 is engaged with the damper rubber 31. The hook 14b is of a known structure in which the hook 14b includes a portion projecting forwards and the damper rubber 31 is fitted between this portion and the seat bottom plate.

The seat rail 12 and the rear stay 13 overlap each other on the upper and lower sides at an acute angle at a rear portion of the rear frame 2, are integrated with each other by welding, and are reinforced by a gusset 32. Carrier brackets 33 are welded to rear end portions of the left and right rear frames 2, front end portions of the rear carrier 27 are bolted to the carrier brackets 33 (see Fig. 2), and a cross pipe 34 is supported between the left and right carrier brackets 33.

In addition, the carrier bracket 33 on the right side of the vehicle body is provided with a bush mount portion 33a, to which a bush 35 is attached by fitting, and a stay 15a projectingly formed on an upper surface of a rear end portion of the muffler 15 is bolted, to thereby support the muffler 15 in a vibrationproofing manner. The rear stay 13 on the right side of the vehicle body is also provided with a similar bush mount portion 13a on the front end portion side, and a bush 35 fitted to the bush mount portion 13a supports a front end portion of the muffler 15 in a vibrationproofing manner. Symbol 15b denotes a stay provided on the front end portion side of the muffler 15. Symbols 38a, 38b, and 38c denote mount stays for the air cleaner 20.

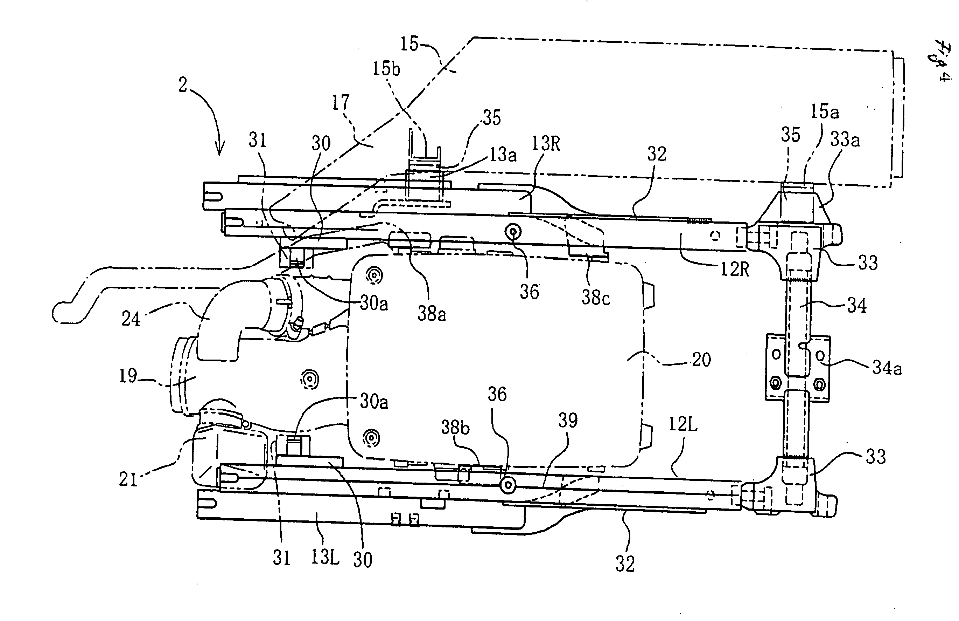

Fig. 4 is a plan view of the rear frames 2. Incidentally, in the following description, of the left and right seat rails 12, the one on the vehicle body right side will be denoted by 12R, while the one on the vehicle body left side will be denoted 12L, as required; similarly, of the rear stays 13, the one on the vehicle body right side will be denoted by 13R, while the one on the vehicle body left side will be denoted by 13L.
The seat rails 12R and 12L and the rear stays 13R and 13L are provided in left-right pairs, and the width between the rear stays 13R and 13L is greater than the width between the seat rails 12R and 12L.

The left and right damper brackets 30 are provided at upper end portions thereof with support shafts 30a projecting into the inside of the vehicle body, and the damper rubbers 31 are attached to the support shafts 30a. The damper rubbers 31 are engaged with the hooks 14b (Fig. 3) provided on the bottom plate of the seat 14, whereby a front portion of the seat 14 is supported in a vibrationproofing manner. Symbol 36 denotes mount bosses for the rear fender 23, which are projected skewly upwards from intermediate portions, in the front-rear direction, of the left and right seat rails 12. Symbol 34a denotes a support plate for a seat lock for a rear end portion of the seat 14.

As is clear from this figure, the muffler 15 which is a heavy body is disposed only on the vehicle body right side, so that the seat rail 12R on the vehicle body right side is provided with the bush mount portion 33a and the rear stay 13R on the vehicle body right side is provided with the bush mount portion 13a.

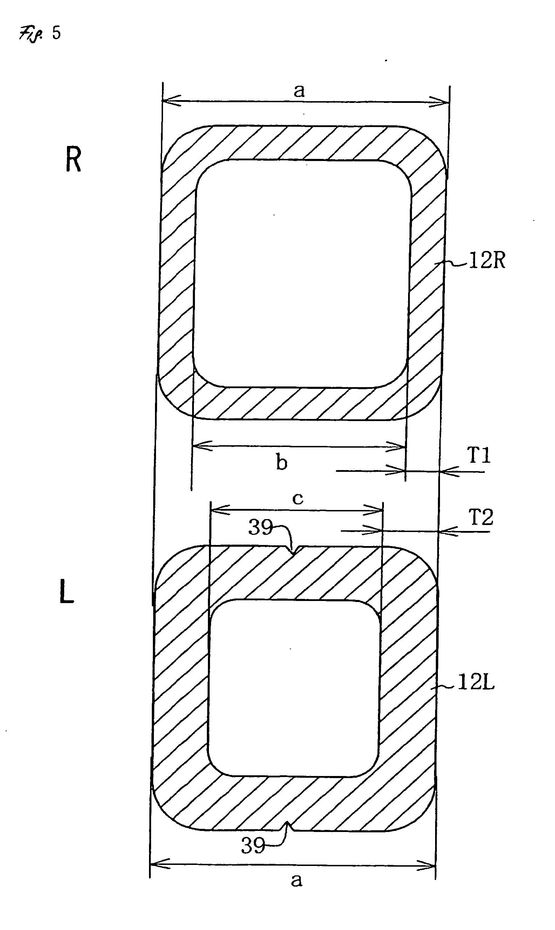

Fig. 5 shows left and right seat rail sections along line 5-5 of Fig. 4, in which R shows the section of the seat rail 12R on the vehicle body right side, and L shows the section of the seat rail 12L on the vehicle body left side. Incidentally, the same applies also to the rear stays 13, and, therefore, description will be made of the seat rails 12. As is clear from this figure, the right seat rail 12R and the left seat rail 12L are both formed in the shape of angular pipes, and the outside sizes a of the right and left seat rails 12R and 12L are equal.

On the other hand, the inside sizes b and c of the right and left seat rails 12R and 12L are different. In this case, the inside size b of the seat rail 12R on the vehicle body right side where the muffler 15 as a heavy body is supported is greater than the inside size c of the seat rail 12L on the vehicle body left side where the muffler 15 is not supported (b > c).

In other words, the plate thickness T1 of the seat rail 12R on the vehicle body right side where the muffler 15 as a heavy body is supported is smaller than the plate thickness T2 of the seat rail 12L on the vehicle body left side where the muffler 15 is not supported (T1 < T2).
With the larger plate thickness T2, the seat rail 12L on the vehicle body left side is increased in overall weight as compared with that on the right side, resulting in a difference in vibration mode.

In view of this, by regulating the plate thickness T2 relative to the plate thickness T1, a weight regulation is conducted so that the vibration mode in the seat rail 12L on the vehicle body left side where the heavy body is not supported is the same as or approximate to the vibration mode in the seat rail 12R on the vehicle body right side where the muffler 15 as a heavy body is supported. The plate thicknesses T1 and T2 can be arbitrarily regulated, preferably in the range of 1.8 to 6.0 mm, while maintaining the above-mentioned relationship T1 < T2. A preferable example can be set in which the ratio between the plate thicknesses T1 and T2 is T1:T2 = 1:1.25, and the plate thickness T1 is 2.0 mm, while the plate thickness T2 is 2.5 mm.

Besides, the seat rail 12L on the vehicle body left side is provided in its upper and lower surfaces with identification marks 39 as mis-assembly preventive means. The identification marks 39 are straight grooves formed along the longitudinal direction of the seat rail 12L, and where the seat rail 12L is produced by extrusion of a light alloy, the identification marks 39 are formed simultaneously with the extrusion by a die. Incidentally, the positions of the identification marks 39 are not particularly limited but are located at any positions in the left-right direction and the like, insofar as the identification marks 39 are easily visible. Besides, the identification marks 39 may be provided in either one of the left and right seat rails.

Functions of the present embodiment will be described below. As shown in Fig. 4, only the seat rail 12R on one side, of the left and right seat rails 12R and 12L, supports the muffler 15 as a heavy body, while the seat rail 12L on the other side does not support a heavy body, so that the weight supported on the seat rail 12R and the weight supported on the seat rail 12L are different (non-uniform).

Therefore, while the use of the same pipe-like member on the left and right sides leads to different vibration modes and possibly to the generation of resonance, the seat rail 12R and the seat rail 12L in this embodiment differ from each other in plate thickness and hence in weight; specifically, since the plate thickness T2 of the seat rail 12L on the side where the muffler 15 as a heavy body is not supported is greater than the plate thickness T1 of the seat rail 12R on the side where a heavy body is supported, the weight of the seat rail 12L is greater. As a result, though the weight supported on the right seat rail 12R is different from the weight supported on the left seat rail 12L, the vibration modes in the right and left seat rails 12R and 12L can be regulated to be equal to or similar to each other, whereby the generation of resonance can be prevented or suppressed.

In addition, since the outside size a is common for both the right and left seat rails 12R and 12L notwithstanding the difference in plate thickness between the right and left sides, the diametral size or the like on an outside shape basis is constant, and good appearance quality can be maintained. Moreover, the constant diametral size allows the use of common component parts and the like on the left and right sides, thereby enhancing assemblability in assembling work.

In addition, since the seat rail 12L is provided with the identification marks 39 as mis-assembly preventive means, the right and left seat rails 12R and 12L differing in plate thickness can be discriminated from each other through quick visual checking. Therefore, the right and left seat rails 12R and 12L which are not considerably different in appearance can be mounted by discriminating them from each other easily and accurately, whereby mis-assembly on the left and right sides can be prevented, so that assemblability is further enhanced.

Incidentally, the present invention is not limited to the above-described embodiment, and various applications and modifications are possible within the scope of the claims. For example, the heavy body supported by the rear frame may not necessarily be the muffler but may be a battery or the like component part. Besides, the hollow members differing in material thickness between the left and right sides may be the rear stays 13, or may be both the seat rails 12 and the rear stays 13. Specifically, in the above-described embodiment, the hollow members may be used to constitute the entire body or an arbitrary part of each of the left and right rear frames 2. Alternatively, the hollow members may be used on the side of the vehicle body frame 1 on the front side of the rear frames 2.
The hollow members are not limited to angular pipes but may be any of hollow members such as round pipes, channel members opened at a part of side surface, etc.; the method of producing the hollow members is not limited to extrusion, and various known methods can be utilized for the production.

Furthermore, the mis-assembly preventive means is not limited to the identification marks 39, and there can be used stamping of scattered points, indication by a paint or the like, etc. In some cases, small projections serving as marks or the like may be adhered. It should be noted here that in the case of the embodiment, the identification marks 39 can be formed simultaneously with the formation of the pipe-like members by extrusion using a light alloy, which enables advantageous formation of the mis-assembly preventive means.

1: Main frame; 2: Rear frame; 12: Seat rail; 12R: Seat rail on vehicle body right side; 12L: Seat rail on vehicle body left side; 13: Rear stay; 14: Seat; 15: Muffler; 39: Identification mark

## Claims

1. A vehicle body frame structure (1) comprising a vehicle body frame (1) having a left-right pair of hollow members (12R, 12L) which are equal in outside size, wherein a heavy body (15) is supported on the side of only one of said left-right pair of hollow members, and the plate thickness of said hollow member on the other side is greater than the plate thickness of said hollow member on the side where said heavy body is supported.

2. The vehicle body frame structure (1) as set forth in claim 1, wherein said heavy body is an exhaust muffler (15) or a battery, and said left-right pair of hollow members differing in plate thickness are seat rails (12) for supporting a seat.

3. The vehicle body frame structure (1) according to any of the preceding claims, wherein said hollow member on one side, of said hollow members differing in plate thickness between the left and right sides, is provided with a mis-assembly preventive means for discrimination thereof from said hollow member on the other side.

## Patentansprüche

1. Fahrzeugkörperrahmenaufbau (1), umfassend einen Fahrzeugkörperrahmen (1) mit einer links-rechts Paarung von hohlen Elementen (12R, 12L), die ein gleiches Außenmaß aufweisen, worin ein schwerer Körper (15) auf der Seite lediglich eines Elements der links/rechts Paarung von hohlen Elementen abgestützt wird, und die Blechdicke des hohlen Elements auf der anderen Seite größer ist als die Blechdicke des hohlen Elements auf der Seite, auf der der schwere Körper abgestützt ist.

2. Fahrzeugkörperrahmenaufbau (1) gemäß Anspruch 1, worin der schwere Körper ein Auspuffschalldämpfer (15) oder eine Batterie ist, und die links-rechts Paarung von hohlen Elementen, die sich in der Blechdicke unterscheiden, Sitzschienen (12) zur Halterung eines Sitzes betrifft.

3. Fahrzeugkörperrahmenaufbau (1) gemäß einem der vorhergehenden Ansprüche, worin das hohle Element auf einer Seite von den hohlen Elementen, die sich in der Blechdicke zwischen der linken und rechten Seite unterscheiden, mit einem Mittel zur Verhinderung des Fehlzusammenbaus zu dessen Unterscheidung von dem hohlen Element auf der anderen Seite versehen ist.

## Revendications

1. Structure de châssis de carrosserie de véhicule (1) comprenant un châssis de carrosserie de véhicule (1) ayant une paire d'éléments creux gauche - droit (12R, 12L) qui ont une taille externe identique, dans laquelle une carrosserie lourde (15) est supportée sur le côté seulement de l'un de ladite paire d'éléments creux gauche - droit, et l'épaisseur de plaque dudit élément creux de l'autre côté est supérieure à l'épaisseur de plaque dudit élément creux du côté où ladite carrosserie lourde est supportée.

2. Structure de châssis de carrosserie de véhicule (1) selon la revendication 1, dans laquelle ladite carrosserie lourde est un silencieux (15) ou une batterie, et ladite paire d'éléments creux gauche - droit présentant une différence d'épaisseur de plaque sont des rails de siège (12) pour supporter un siège.

3. Structure de châssis de carrosserie de véhicule (1) selon l'une quelconque des revendications précédentes, dans laquelle ledit élément creux d'un côté desdits éléments creux présentant une différence d'épaisseur de plaque entre les côtés gauche et droit, est prévu avec des moyens anti erreurs d'assemblage pour leur discrimination par rapport audit élément creux situé de l'autre côté.
